Europäisches Patentamt

European Patent Office

Office européen des brevets

(11) Publication number: **0 080 587**
A2

# EUROPEAN PATENT APPLICATION

(21) Application number: 82109389.5

(22) Date of filing: 11.10.82

(51) Int. Cl.³: **B 60 R 13/06**
B 60 J 1/10, B 60 J 1/18

(30) Priority: 22.10.81 IT 6836781

(43) Date of publication of application:
08.06.83 Bulletin 83/23

(84) Designated Contracting States:
DE FR GB

(71) Applicant: FIAT AUTO S.p.A.
Corso Giovanni Agnelli 200
I-10135 Torino(IT)

(72) Inventor: Possetti, Luciano
Via Garibaldi, 2 B
I-10022 Carmagnola Torino(IT)

(72) Inventor: Carcerano, Piero Luigi
Via Peyron, 50
I-10100 Torino(IT)

(74) Representative: Prato, Roberto et al,
c/o Ingg. Carlo e Mario Torta Via Viotti 9
I-10121 Torino(IT)

(54) A retaining assembly for windows fixed at their edges to the body, particularly of motor vehicles.

(57) A retaining assembly for windows fixed at their edges to the bodywork, particularly of motor vehicles, comprising a metal frame formed with a projection and a channel in which there is located a seal which is interposed on one side between the edge of the window and the said frame whilst on the other side it is interposed between this latter and the bodywork.

EP 0 080 587 A2

./...

- 1 -

A retaining assembly for windows fixed at their edges to the body, particularly of motor vehicles.

The present invention relates to a retaining assembly for windows fixed at their edges to the body of a vehicle, particularly for motor vehicles.

Motor vehicle manufacturers are continually aware of the problem of improving the coefficient of penetration through the air of motor vehicles, the so-called "CX" coefficient, particularly for motor vehicles of a certain class and power where this requirement for a streamline form is almost essential for reliability and in order to obtain a low fuel consumption.

This is obtained by eliminating as much as possible the body profile zones of the motor vehicle body which project in such a way as to create, when the motor vehicle is moving, turbulence and vortices in the flow of air which passes over the profile.

Among these solutions is that of bringing the outer edge of fixed windows, such as, for example the rear windows and the windscreen, as close as possible to the edge of the region of the body on which they are mounted.

To achieve this various solutions have been studied such as, for example, reducing the thickness of the resilient seal which seals and retains the window and in which the edge of this latter is housed, a reduction which must be necessarily contained so as not to prejudice the above-mentioned functions exercised by the said seal on the window.

Such attempts do not achieve appreciable results as far as the aerodynamic form of the motor vehicle is concerned. Another expedient which is normally adopted is that of eliminating the outer projection of the resilient seal by securing the edge of the window directly to the outer metal frame with adhesive. This method allows the edge of the window to be brought very close to the edge of the body. However, with this a series of consequent disadvantages arise such as, for example, the cost of the adhesives used, and the significantly long time required for the adhesive to exert its function to hold the edge of the window securely to the outer frame, a time during which the particular adhesive must not be moved.

The object of the present invention is that of providing a retaining assembly for fixed windows, which will allow satisfactory results to be obtained for the purpose of improving the aerodynamic form of the motor vehicle, by obviating the above described disadvantages, and which will be simple to manufacture and at the same time of low cost.

The present invention achieves these objects by means of a retaining assembly for a window fixed at its edge to the body, particularly of a motor vehicle, characterised by the fact that it includes an outer metal frame formed around the whole of its perimeter with an outer projection and a channel in which is located a first part of a resilient seal which is interposed between the edge of the said window and the channel of the said frame, a second part of the said seal being interposed between the said frame and the body profile and the seal being provided with three sealing lips.

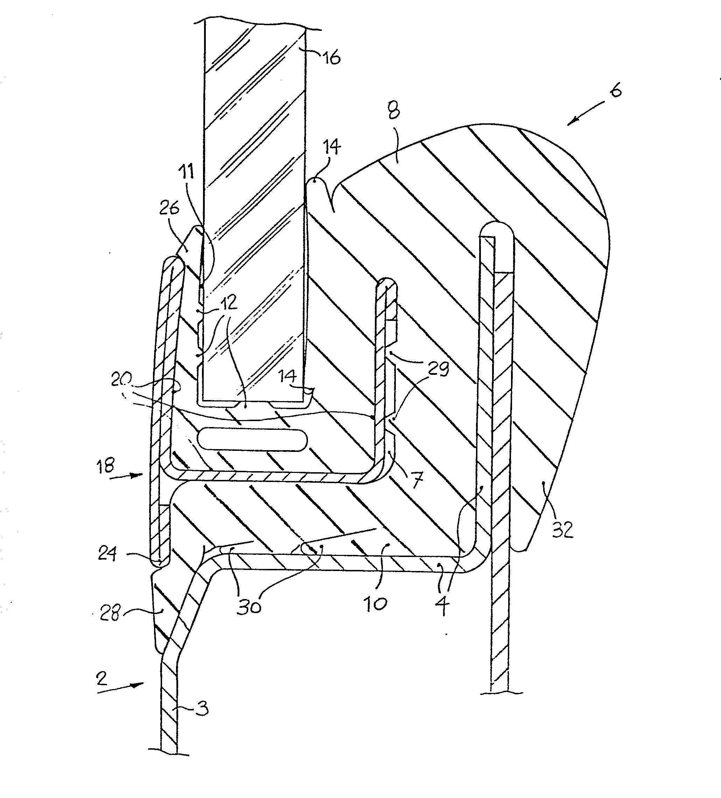

We will now describe the invention with particular reference to the attached drawing which shows a sectional view of the retaining assembly forming the subject of the present invention.

As can be seen in the drawing, the body profile is generally indicated with the reference numeral 2 and is schematically shown having a development which extends from the outer wall 3 to form a substantially L-shape profile indicated 4. A resilient seal 6 is divided by an L-shape slot 7 into two parts indicated 8 and 10. Over the whole of the perimeter of the part 8 of the seal 6 there is formed a seat 11 provided with a series of protuberances 12 and swellings 14 operable to seal a window 16 the edge of which is housed within the said seat.

An outer metal frame 18 is formed over the whole of its perimeter on one side with a channel 20 of substantially U-shape form within which the part 8 of the seal 6 is inserted, whilst on the other side there is a projection 24.

A first sealing lip 26 formed on the part 8 of the seal 6 is interposed between the edge of the window which projects from the seat 11 and the upper edge of the outer side of the channel 20 of the outer frame 18. A second sealing lip 28 is interposed between the edge of the projection 24 and the outer wall 3 of the body profile. This second sealing lip 28 is formed on the part 10 of the seal 6 which is interposed between the outer walls of the channel 20 of the outer frame and the L-shape profile 4 of the body. A series of protuberances 29 are formed in the L-shape slot 7 and lie in contact with an outer wall of the channel 20.

Both the sealing lips 26 and 28 serve to prevent the possible infiltration of water between the outer frame and the window and between this latter and the body. In the part 10 of the seal 6 there are formed a second series of swellings or enlargements 30 in contact with the inner wall of the L-shape profile 4 of the body. A third lip 32 is formed on the seal 6 and is intended to engage on the inner wall of the L-shape profile 4 of the body. The assembly of this construction takes place as follows.

The edge of the window 16 is inserted into the seat 11 of the seal 6, after which by spreading the two parts 8 and 10 of the said seal 6 apart the part 8 of this latter is inserted into the channel 20 of the outer frame 18. Subsequently, and after having released the part 10 of the seal 6 in such a way that it comes into contact with the outer walls of the channel 20 of the outer frame, the lip 32 of the said seal is maintained raised, for example with a length of cord, and after having inserted it into the L-shape wall 4 of the body profile it is released in such a way that it hooks stably over this latter thus guaranteeing the junction between the frame-seal-glass assembly with the body.

As will be apparent, with this assembly the outer frame performs the function of retaining the window whilst the seal guarantees the prevention of infiltration and the connection in a stable manner between the frame-seal-window unit and the body.

With this method there is obtained a significant reduction in the distance between the edge of the window and the edge of the region of the body on which it is mounted without, however, prejudicing the seal between this latter and the body.

Dr. Ing. Roberto PRATO

0080587

- 6 -

Claims:

1. A retaining assembly for a window fixed at its edge to the body, particularly of a motor vehicle, characterised by the fact that it includes an outer metal frame formed around the whole of its perimeter with an outer projection and with a channel into which there is located a first part of a resilient seal which is interposed between the edge of the said window and the channel of the said frame, a second part of the said seal being interposed between the said frame and the body profile and the seal being provided with three sealing lips.

2. A retaining assembly according to claim 1, characterised by the fact that around the whole of the perimeter of the said seal there is formed a seat in which the edge of the window is located.

3. A retaining assembly according to Claim 1, characterised by the fact that the said seal is provided with enlargements and projections in contact, respectively, with the edge of the window, the outer wall of the channel in the frame and with the Body profile.

4. A retaining assembly according to Claim 1, characterised by the fact that two of the three sealing lips of the seal are disposed respectively between the outer body profile and the projection of the frame, and between the said frame and the edge of the window.

5.   A retaining assembly according to Claim 1, characterised by the fact that the third sealing lip of the seal is fitted over the inside of the body profile.

Dr. Ing. Roberto PRATO

- ·1/1 -

Dr. Ing. Roberto PRATO